# EUROPÄISCHE PATENTSCHRIFT

(11) **EP 2 113 011 B1**
(45) Veröffentlichungstag und Bekanntmachung des Hinweises auf die Patenterteilung: **21.02.2018**
(21) Anmeldenummer: 07821369.1
(22) Anmeldetag: 16.10.2007
(51) Int. Cl.: C09B 29/033, C09B 29/44, C09B 29/08

(54) **DISPERSIONSFARBSTOFFE, IHRE HERSTELLUNG UND IHRE VERWENDUNG**
DISPERSE DYES, THEIR PREPARATION AND THEIR USE
COLORANTS POUR DISPERSION, LEUR FABRICATION ET LEUR UTILISATION

(30) Priorität: 27.10.2006 DE 102006050642
(43) Veröffentlichungstag der Anmeldung: 04.11.2009
(73) Patentinhaber: DyStar Colours Distribution GmbH, 65479 Raunheim (DE)
(72) Erfinder: JORDAN, Hartwig, 51467 Bergisch Gladbach (DE); NEUBAUER, Stefan, 50931 Köln (DE)
(86) Internationale Anmeldenummer: PCT/EP2007/061002
(87) Internationale Veröffentlichungsnummer: WO 2008/049758

(56) Entgegenhaltungen:
- EP-A- 1 411 089
- WO-A-2005/056690
- DE-A1- 2 612 742
- GB-A- 909 843

## Beschreibung

Gegenstand der vorliegenden Erfindung sind Dispersions-Azofarbstoffe, in denen ein 2-Oxoalkylester mit dem Chromophor verknüpft ist. Farbstoffe, die dieses Strukturelement aufweisen sind bereits bekannt und beispielsweise in GB 909843, WO95/20014 und WO05/056690 beschrieben. Weiterhin sind zyklische Ester in der Diazokomponente in EP 1 411 089 und substituierte Ester in der Kupplungskomponente in DE 26 12 742 beschrieben.

Es wurde nun gefunden, dass Dispersions-Azofarbstoffe, in denen das genannte Strukturelement mit weiteren ausgewählten Strukturelementen in bestimmter Weise verknüpft wird, hervorragende Eigenschaften aufweisen und sich damit hergestellte Färbungen durch ausgezeichnete Waschechtheiten und sehr gute Sublimierechtheiten auszeichnen.

Die vorliegende Erfindung betrifft Farbstoffe der allgemeinen Formel (I) 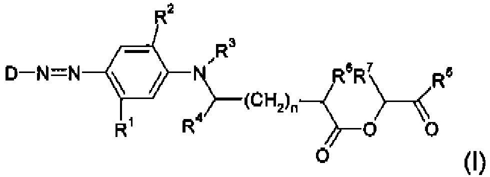 worin
- D: für eine Gruppe der Formel (IIa) steht 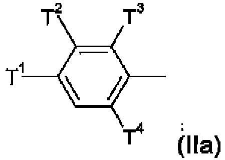
worin
T¹ und T² unabhängig voneinander Wasserstoff, (C₁-C₆)-Alkyl, (C₁-C₄)-Alkoxy, -SO₂(C₁-C₆)-Alkyl, -SO₂Aryl, Cyano, Halogen oder Nitro; und
T⁴ und T³ unabhängig voneinander Wasserstoff, Halogen, Trifluormethyl, Cyano, - SCN, -SO₂CH₃ oder Nitro;
bedeuten, wobei mindestens einer der Reste T¹, T², T³ und T⁴ nicht Wasserstoff bedeutet;
oder für eine Grupppe der Formel (IIb) 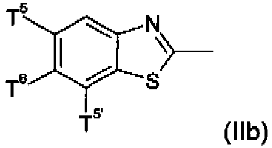 worin
T⁵ und T^{5'} unabhängig voneinander Wasserstoff oder Halogen; und
T⁶ Wasserstoff, -SO₂CH₃, -SCN, (C₁-C₄)-Alkoxy, Halogen oder Nitro; bedeuten, wobei mindestens einer der Reste T⁵, T^{5'} und T⁶ nicht Wasserstoff bedeutet;
oder für eine Gruppe der Formel (IIc) 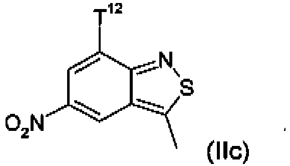 worin
T¹² Wasserstoff oder Halogen bedeutet;
oder für eine Gruppe der Formel (IId) 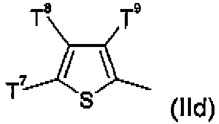 worin
T⁷ Nitro, -CHO, Cyano, -COCH₃ oder eine Gruppe der Formel 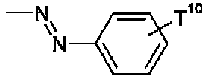
bedeutet, worin T¹⁰ Wasserstoff, Halogen, Nitro oder Cyano ist;
T⁸ Wasserstoff, (C₁-C₆)-Alkyl oder Halogen; und
T⁹ Nitro, Cyano, -COCH₃ oder -COOT¹¹; bedeuten, worin T¹¹(C₁-C₄)-Alkyl ist;
oder für eine Gruppe der Formel (IIe) 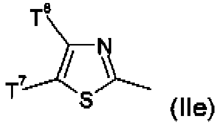 worin T⁷ und T⁸ wie oben angegeben definiert sind;
oder für eine Gruppe der Formel (IIf) 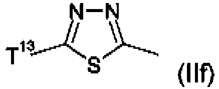
worin T¹³ Phenyl oder S-(C₁-C₄)-Alkyl bedeutet,
R¹ für Wasserstoff, Chlor, Methyl, Ethyl, Methoxy, Hydroxy, Ethoxy, Acetylamino, Propionylamino, Benzoylamino, Methylsulfonylamino, Ethylsulfonylamino oder Phenylsulfonylamino;
R² für Wasserstoff, Chlor, Methyl, Ethyl, Methoxy, Ethoxy oder Phenoxy;
R³ für Wasserstoff, Benzyl, Phenylethyl, Phenoxyethyl, Methoxyethyl, Cyanoethyl, - C₂H₄OCOCH₃, -C₂H₄OCOC₂H₅,
-C₂H₄COOCH₃, -C₂H₄COOC₂H₅ oder Allyl;
R⁴ und R⁷ für Wasserstoff, Methyl oder Phenyl;
R⁵ für Methyl oder Ethyl;
R⁶ für Wasserstoff oder Methyl; und
n für 0 oder 1 stehen.

(C₁-C₆)-Alkyl-Gruppen können geradkettig oder verzweigt sein und bedeuten beispielsweise Methyl, Ethyl, n-Propyl, i-Propyl, n-Butyl, i-Butyl, tert.-Butyt, n-Pentyl oder n-Hexyl. Analoges gilt für Alkoxygruppen, die beispielsweise Methoxy oder Ethoxy bedeuten. (C₃-C₄)-Alkenyl-Gruppen sind insbesondere Allyl.

Substituierte (C₁-C₆)-_{A}lkyl- und (C₃-C₄)-Alkenyl-Gruppen sind insbesondere substituiert durch 1 bis 3 Substituenten aus der Reihe Halogen, Cyano, Hydroxy, (C₁-C₆)-Alkoxy, -COO(C₁-C₆)-Alkyl, -COOAryl, -OCOO(C₁-C₆)-Alkyl, -OCOOAryl, - OCO(C₁-C₆)-Alkyl, Phenyl, -OCOPhenyl und Phenoxy.

Aryl ist insbesondere Phenyl oder Naphthyl, -NHSO₂Aryl ist insbesondere Phenylsulfonylamino. Halogen steht bevorzugt für Chlor oder Brom.

R⁴ und R⁷ stehen besonders bevorzugt für Wasserstoff.
n steht besonders bevorzugt für 0.

Bevorzugte erfindungsgemäße Farbstoffe entsprechen der allgemeinen Formel (Ia) 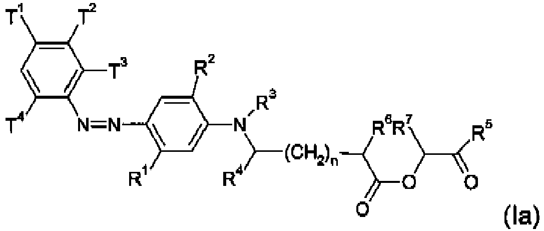 worin T¹ bis T⁴, R¹ bis R⁷ und n wie oben angegeben definiert sind.

In besonders bevorzugten Farbstoffen der allgemeinen Formel (Ia) bedeuten
R¹ Acetylamino, Propionylamino, Benzoylamino oder Methylsulfonylamino;
R² Wasserstoff, Chlor, Methoxy oder Ethoxy;
R³ Wasserstoff, Allyl oder Benzyl;
R⁴ Wasserstoff oder Methyl;
R⁵ Methyl oder Ethyl;
R⁸ Wasserstoff oder Methyl und
R⁷ Wasserstoff, Methyl oder Phenyl stehen.

Besonders bevorzugte erfindungsgemäße Farbstoffe der allgemeinen Formel (Ia) entsprechen der allgemeinen Formel (Iaa) 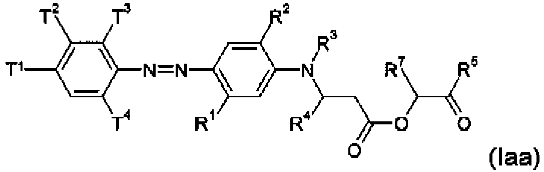 worin
T¹ für Wasserstoff, Nitro oder Methyl;
T² für Wasserstoff, Nitro oder Chlor;
T³ für Wasserstoff, Cyano, Chlor oder Brom;
T⁴ für Wasserstoff, Cyano, Nitro, Chlor, Brom oder Trifluormethyl;
R¹ für Wasserstoff, Hydroxy, Chlor, Methyl, Acetylamino, Propionylamino, Benzoylamino oder Methylsulfonylamino;
R² für Wasserstoff, Chlor, Methyl, Phenoxy, Methoxy oder Ethoxy;
R³ für Wasserstoff, Benzyl, Phenylethyl, Phenoxyethyl oder Allyl;
R⁵ für Methyl oder Ethyl; und
R⁴ und R⁷ für Wasserstoff, Methyl oder Phenyl
Stehen.

Weitere bevorzugte erfindungsgemäße Farbstoffe entsprechen der allgemeinen Formel (Ib) 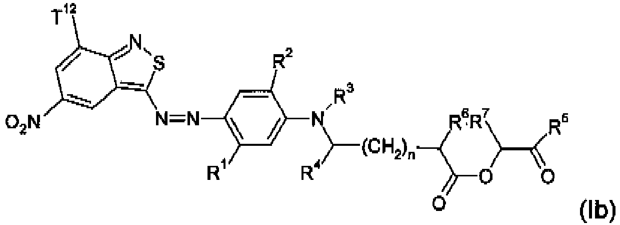 worin T¹², R¹ bis R⁷ und n wie oben angegeben definiert sind.

Besonders bevorzugte erfindungsgemäße Farbstoffe dieses Typs entsprechen der allgemeinen Formel (Iba) 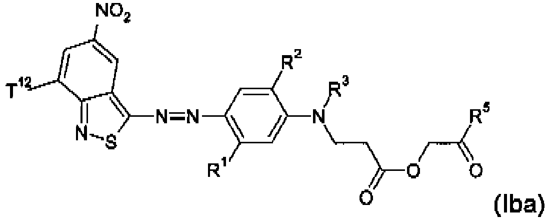 worin
T¹² für Wasserstoff, Chlor oder Brom;
R¹ für Wasserstoff, Hydroxy, Methyl, Acetylamino oder Propionylamino;
R² für Wasserstoff, Methyl, Chlor oder Methoxy;
R³ für Wasserstoff, Benzyl oder Allyl; und
R⁵ für Methyl oder Ethyl;
stehen.

Weitere bevorzugte erfindungsgemäße Farbstoffe entsprechen der allgemeinen Formel (Ic) 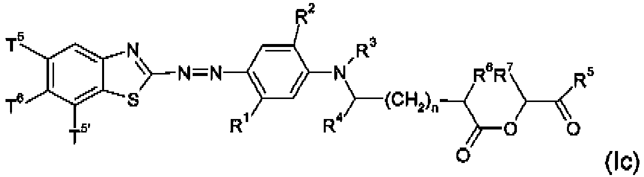 worin T⁵, T^{5'}, T⁶, R¹ bis R⁷ und n wie oben angegeben definiert sind.

Besonders bevorzugte erfindungsgemäße Farbstoffe dieses Typs entsprechen der allgemeinen Formel (Ica) 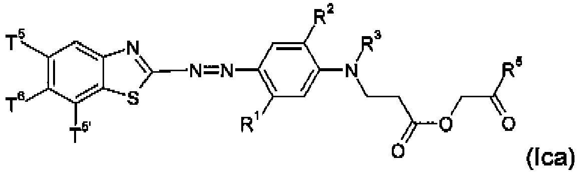 worin
T⁵ und T^{5'} unabhängig voneinander Wasserstoff oder Halogen;
T⁶ Halogen oder Nitro;
R¹ für Wasserstoff, Hydroxy, Methyl, Acetylamino oder Propionylamino;
R² für Wasserstoff, Methyl, Chlor oder Methoxy;
R³ für Wasserstoff, Benzyl oder Allyl; und
R⁵ für Methyl oder Ethyl;
stehen.

Weitere bevorzugte erfindungsgemäße Farbstoffe entsprechen der allgemeinen Formel (Id) 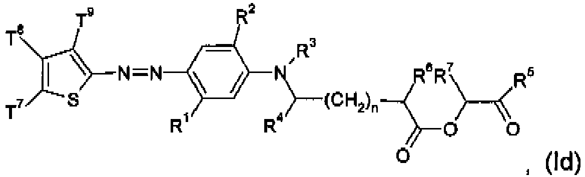 entspricht, worin T⁷ bis T⁹, R¹ bis R⁷ und n wie oben angegeben definiert sind.

Besonders bevorzugte erfindungsgemäße Farbstoffe dieses Typs entsprechen der allgemeinen Formel (Ida) 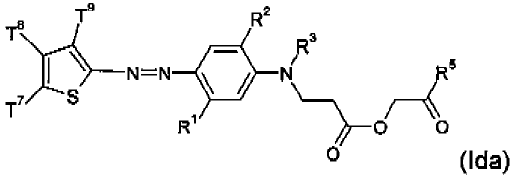 worin
T⁷ Nitro, -CHO oder Cyano;
T⁸ Wasserstoff, Methyl oder Chlor;
T⁹ Nitro, Cyano oder -COCH₃;
R¹ Wasserstoff, Hydroxy, Methyl, Acetylamino oder Propionylamino;
R² Wasserstoff, Methyl, Chlor oder Methoxy;
R³ Wasserstoff, Benzyl, Phenoxyethyl oder Allyl; und
R⁵ Methyl oder Ethyl;
bedeuten.

Weitere besonders bevorzugte erfindungsgemäße Farbstoffe dieses Typs entsprechen der allgemeinen Formel (Idb) 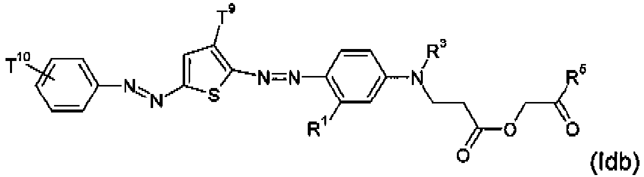 worin
T¹⁰ Nitro;
T⁹ Cyano oder -COCH₃;
R¹ Wasserstoff, Methyl, oder Acetylamino;
R³ Allyl; und
R⁵ Methyl oder Ethyl;
bedeuten.

Weitere bevorzugte erfindungsgemäße Farbstoffe entsprechen der allgemeinen Formel (Ie) 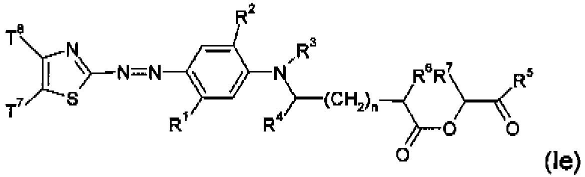 worin
worin T⁷, T⁸, R¹ bis R⁷ und n wie oben angegeben definiert sind und wobei T⁷ insbesondere Nitro, -CHO, COCH₃ oder Cyano bedeutet;
Besonders bevorzugte erfindungsgemäße Farbstoffe dieses Typs entsprechen der allgemeinen Formenl (Iea) 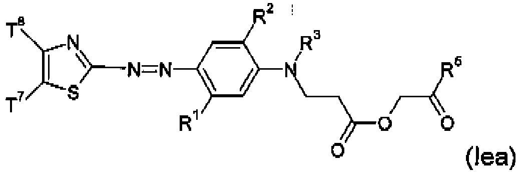 worin
T⁷ Nitro, -CHO oder Cyano;
T⁸ Wasserstoff oder Chlor;
R¹ Wasserstoff, Hydroxy, Methyl, Acetylamino oder Propionylamino;
R² Wasserstoff, Methyl, Chlor oder Methoxy;
R³ Wasserstoff, Benzyl, Phenoxyethyl oder Allyl; und
R⁵ Methyl oder Ethyl;
bedeuten.

Weitere bevorzugte erfindungsgemäße Farbstoffe entsprechen der allgemeinen Formel (If) 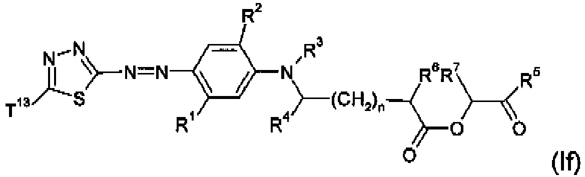 worin
T¹³, R¹ bis R⁷ und n wie oben angegeben definiert sind.

Besonders bevorzugte erfindungsgemäße Farbstoffe dieses Typs entsprechen der allgemeinen Formel (Ifa) 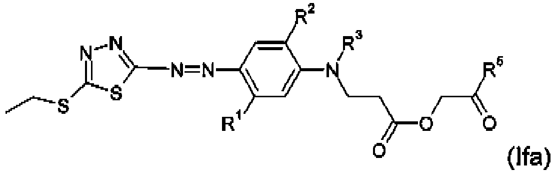 worin
R¹ Wasserstoff, Hydroxy, Methyl, Acetylamino oder Propionylamino;
R² Wasserstoff, Methyl, Chlor oder Methoxy;
R³ Wasserstoff, Benzyl, Phenoxyethyl oder Allyl; und
R⁵ Methyl oder Ethyl;
bedeuten.

Die erfindungsgemäßen Farbstoffe der allgemeinen Formel (I) können mittels Methoden hergestellt werden, die dem Fachmann bekannt sind.
So wird beispielsweise eine Verbindung der allgemeinen Formel (III)

D-NH₂ (III)

worin D wie oben angegeben definiert ist, diazotiert und auf eine Verbindung der allgemeinen Formel (IV) 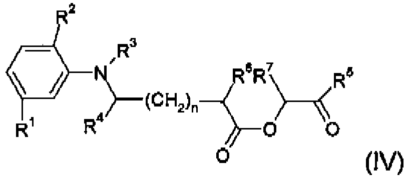 worin R¹ bis R⁷ und n wie oben angegeben definiert sind, gekuppelt.

Die Diazotierung der Verbindungen der allgemeinen Formel (III) erfolgt in der Regel in bekannter Weise, zum Beispiel mit Natriumnitrit in saurem, zum Beispiel salz- oder schwefelsaurem wässrigem Medium oder mit Nitrosylschwefelsäure in verdünnter Schwefelsäure, Phosphorsäure oder in einem Gemisch aus Essig- und Propionsäure. Der bevorzugte Temperaturbereich liegt zwischen 0°C und 15°C.

Die Kupplung der diazotierten Verbindungen auf die Verbindungen der allgemeinen Formel (IV) erfolgt in der Regel ebenfalls in bekannter Weise, beispielsweise in saurem, wässrigem, wässrig-organischem oder organischem Medium, besonders vorteilhaft bei Temperaturen unter 10°C. Als Säuren verwendet man insbesondere Schwefelsäure, Essigsäure oder Propionsäure.

Die Verbindungen der allgemeinen Formeln (III) und (IV) sind bekannt und können nach bekannten Methoden hergestellt werden.

Die erfindungsgemäßen Farbstoffe der allgemeinen Formel (I) eignen sich in hervorragender Weise zum Färben und Bedrucken von hydrophoben Materialien, wobei sich die erhaltenen Färbungen und Drucke durch egale Farbtöne und hohe Gebrauchsechtheiten auszeichen. Hervorzuheben sind ausgezeichnete Waschechtheiten und sehr gute Sublimierechtheiten.

Die vorliegende Erfindung betrifft somit auch die Verwendung der Farbstoffe der allgemeinen Formel I zum Färben und Bedrucken von hydrophoben Materialien bzw. Verfahren zum Färben oder Bedrucken solcher Materialien in an und für sich üblichen Verfahrensweisen, bei welchen man einen oder mehrere erfindungsgemäße Farbstoffe der allgemeinen Formel (I) als Farbmittel einsetzt.

Die genannten hydrophoben Materialien können synthethischen oder halbsynthetischen Ursprungs sein. Es kommen beispielsweise Cellulose-2½-acetat, Cellulosetriacetat, Polyamide und insbesondere hochmolekulare Polyester in Betracht. Materialien aus hochmolekularem Polyester sind insbesondere solche auf Basis von Polyethylenglykolterephthalaten.
Die hydrophoben synthetischen Materialien können in Form von flächen- oder fadenförmigen Gebilden vorliegen und beispielsweise zu Garnen oder gewebten, gewirkten oder gestrickten Textilstoffen verarbeitet sein. Bevorzugt sind faserförmige Textilmaterialien, die beispielsweise auch in Form von Mikrofasern vorliegen können.

Das Färben gemäß erfindungsgemäßer Verwendung kann in an sich bekannter Weise erfolgen, vorzugsweise aus wässriger Dispersion, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermafixierverfahrert, wobei die Ware mit der Färbeflotte geklotzt und anschließend bei etwa 180 bis 230°C fixiert wird.

Das Bedrucken der genannten Materialien kann in an sich bekannter Weise so durchgeführt werden, dass die erfindungsgemäßen Farbstoffe der allgemeinen Formel (I) einer Druckpaste einverleibt werden und die damit bedruckte Ware zur Fixierung des Farbstoffes, gegebenenfalls in Gegenwart eines Carriers, bei Temperaturen zwischen 180 bis 230°C mit HT-Dampf, Druckdampf oder Trockenhitze behandelt wird.

Die erfindungsgemäßen Farbstoffe der allgemeinen Formel (I) sollen bei ihrer Anwendung in Färbeflotten, Klotzflotten oder Druckpasten in möglichst feiner Verteilung vorliegen.
Die Feinverteilung der Farbstoffe erfolgt in an sich bekannter Weise dadurch, dass man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, dass eine optimale spezifische Oberfläche erreicht wird und die Sedimentation des Farbstoffes möglichst gering ist. Dies geschieht in geeigneten Mühlen, wie Kugel- oder Sandmühlen. Die Teilchengröße der Farbstoffe liegt im allgemeinen zwischen 0,5 und 5 µm, vorzugsweise bei etwa 1 µm.
Die bei dem Mahlvorgang mitverwendeten Dispergiermittel können nichtionogen oder anionaktiv sein. Nichtionogene Dispergiermittel sind beispielsweise Umsetzungsprodukte von Alkylenoxiden, wie zum Beispiel Ethylen- oder Propylenoxid mit alkylierbaren Verbindungen, wie zum Beispiel Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungen gießbar sein. Der Farbstoff- und Dispergiermittelgehalt ist daher in diesen Fällen limitiert. Im allgemeinen werden die Dispersionen auf einen Farbstoffgehalt von bis zu 50 Gewichtsprozent und einen Dispergiermittelgehalt von bis zu etwa 25 Gewichtsprozent eingestellt. Aus ökonomischen Gründen werden Farbstoff-gehalte von 15 Gewichtsprozent meist nicht unterschritten.
Die Dispersionen können auch noch weitere Hilfsmittel enthalten, beispielsweise solche, die als Oxiationsmittel wirken, wie zum Beispiel Natrium-m-nitrobenzolsulfonat oder fungizide Mittel, wie zum Beispiel Natrium-o-phenyl-phenolat und Natriumpentachlorphenolat und insbesondere sogenannte "Säurespender", wie zum Beispiel Butyrolacton, Monochloracetamid, Natriumchloracetat, Natriumdichloracotat, das Na-Salz der 3-Chlorpropionsäure, Halbester der Schwefelsäure wie zum Beispiel Laurylsulfat, sowie Schwefelsäureester von oxothylierten und oxypropylierten Alkoholen, wie zum Beispiel Butylglykolsulfat.

Die so erhaltenen Farbstoffdispersionen können sehr vorteilhaft zum Ansatz von Färbelfotten und Druckpasten verwendet werden.

Für gewisse Anwendungsbereiche werden Pulvereinstellungen bevorzugt. Diese Pulver enthalten den Farbstoff, Dispergiermittel und andere Hilfsmittel, wie beispielsweise Netz-, Oxidations-, Konservierungs- und Entstaubungsmittel und die oben genannten "Säurespender" .
Ein bevorzugtes Herstellungsverfahren für pulverförmige Farbstoffzubereitungen besteht darin, dass den oben beschriebenen flüssigen Farbstoffdispersionen die Flüssigkeit entzogen wird, zum Beispiel durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der oben beschriebenen Farbstoffeinstellungen mit dem Färbemedium, vorzugsweise mit Wasser, so weit verdünnt, dass sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise 4,5, eingestellt. Es ist vorteilhaft, den eingestellten pH-Wert abzupuffern und eine ausreichende Menge eines Puffersystems zuzusetzen. Ein vorteilhaftes Puffersystem ist zum Beispiel das System Essigsäure/Natriumacetat.

Soll der Farbstoff oder die Farbstoffmischung im Textildruck verwendet werden, so werden die erforderlichen Mengen der oben genannten Farbstoffeinstellungen in an sich bekannter Weise zusammen mit Verdickungsmitteln, wie zum Beispiel Alkali-Alginaten oder dergleichen, und gegebenenfalls weiteren Zusätzen, wie zum Beispiel Fixierbeschleunigern, Netzmitteln und Oxidationsmitteln, zu Druckpasten verknetet.

Die vorliegende Erfindung betrifft auch Tinten für den digitalen Textildruck nach dem Ink-Jet Verfahren, die dadurch gekennzeichnet sind, dass sie einen erfindungsgemäßen Farbstoff der allgemeinen Formel (I) enthalten.

Die erfindungsgemäßen Tinten sind bevorzugt wässrig und enthalten einen oder mehrere der erfindungsgemäßen Farbstoffe der allgemeinen Formel (I), beispielsweise in Mengen von 0,1 bis 50 Gew.-%, bevorzugt in Mengen von 1 bis 30 Gew.-% und besonders bevorzugt in Mengen von 1 bis 15 Gew.-% bezogen auf das Gesamtgewicht der Tinte.
Daneben enthalten sie insbesondere von 0,1 bis 20 Gew.-% eines Dispergiermittels. Geeignete Dispergiermittel sind dem Fachmann bekannt, im Handel erhältlich und schließen beispielsweise sulfonierte oder sulfomethyllerte Lignine, Kondensationsprodukte aus aromatischen Sulfonsäuren und Formaldehyd, Kondensationsprodukte aus gegebenenfalls substituiertem Phenol und Formaldehyd, Polyacrylate und entsprechende Copolymere, modifizierte Polyurethane und Umsetzungsprodukte von Alkylenoxiden mit alkylierbaren Verbindungen, wie beispielsweise Fettalkoholen, Fettaminen, Fettsäuren, Carbonsäureamiden und gegebenenfalls substituierten Phenolen ein.

Weiterhin können die erfindungsgemäßen Tinten die üblichen Zusatzstoffe enthalten, wie beispielsweise Viskositätsmoderatoren um Viskositäten im Bereich von 1,5 bis 40,0 mPas in einem Temperaturbereich von 20 bis 50 °C einzustellen. Bevorzugte Tinten haben eine Viskosität von 1,5 bis 20 mPas und besonders bevorzugte Tinten haben eine Viskosität von 1,5 bis 15 mPas.
Als Viskositätsmoderatoren eignen sich rheologische Additive, wie beispielsweise Polyvinylcaprolactam, Polyvinylpyrrolidon sowie deren Co-Polymere, Polyetherpolyol, Assoziativverdicker, Polyharnstoff, Natriumalginate, modifizierte Galaktomannane, Polyetherharnstoff, Polyurethan und nichtionogene Celluloseether.

Als weitere Zusätze können die erfindungsgemäßen Tinten oberflächenaktive Substanzen zur Einstellung von Oberflächenspannungen von 20 bis 65 mN/m, die in Abhängigkeit von dem verwendeten Verfahren (Thermo- oder Piezotechnologie) gegebenenfalls angepasst werden.
Als oberflächenaktive Substanzen eignen sich beispielsweise Tenside aller Art, bevorzugt nichtionogene Tenside, Butyldiglykol und1,2 Hexandiol.
Weiterhin können die Tinten noch übliche Zusätze, wie beispielsweise Stoffe zur Hemmung des Pilz- und Bakterienwachstums in Mengen von 0,01 bis 1 Gew.-% bezogen auf das Gesamtgewicht der Tinte enthalten.

Die erfindungsgemäßen Tinten können in üblicher Weise durch Mischen der Komponenten in Wasser hergestellt werden.

### Beispiel 1 [nicht erfikndungsgemäß]:

4.6 g 6-Chlor-2,4-dinitroanilin werden bei 30 bis 35 °C in eine Mischung aus 9.8 ml Schwefelsäure (96%ig), 0.5 ml Wasser und 3.5 ml Nitrosylschwefelsäure (40%ig) eingetragen. Es wird 3 Stunden bei 30 - 35°C nachgerührt und anschließend der Nitritüberschuß mit Amidosulfonsäure zerstört. Die so erhaltene Diazoniumsalzlösung wird zügig zu einer Mischung aus 7.0 g 3-[(5-Acetylamino-2-methoxyphenyl)-ethylamino]-propionsäure 2-oxo-propylester, 50 ml Methanol und 200g Eis zugetropft. Es wirde eine Stunde nachgerührt, abgesaugt, mit Wasser gewaschen und getrocknet. Man erhält 7.3 g des Farbstoffes der Formel (Iab) 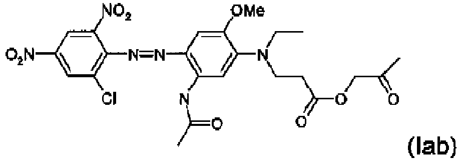 (λₘₐₓ [DMF] = 606 nm), der auf Polyester blaue Farbtöne mit guten Wasch- und Sublimierechtheiten ergibt.

### Beispiel 2 [nicht erfindungsgemäß]:

7.5 g 3-{[3-Acetylamino-4-(2,6-dibrom-4-nitrophenylazo)-phenyl]-ethylamino}-propionsäure 2-oxo-propylester und 2.15 g Kupfer(l)cyanid werden in 30 ml N-Methylpyrrolidon 4 Stunden lang bei 80 °C gerührt. Man lässt abkühlen und tropft 200 ml Methanol und 30 ml Wasser zum Ansatz. Der Niederschlag wird abgesaugt, mit 5%iger Salzsäure und Wasser gewaschen. Nach Trocknung im Vakuum erhält man 4.8 g des Farbstoffes der Formel (Iac) 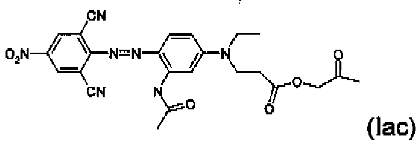 (λₘₐₓ[DMF] = 612 nm), der Polyester in brillianten, blauen Tönen färbt und ausgezeichnete Wasch- und Sublimierechtheiten aufweist.

### Beispiel 3 [nicht erfindungsgemäß]:

Man verfährt wie in Beispiel 2, mit der Ausnahme, dass man von 3-{[3-Acetylamino-4-(6-brom-2,4-dinitrophenylazo)-phenyl]-ethylamino}-propionsäure 2-oxo-propylester ausgeht und nur ein Äquivalent Kupfer(l)cyanid einsetzt. Der so erhaltene Farbstoff der Formel (Iad) 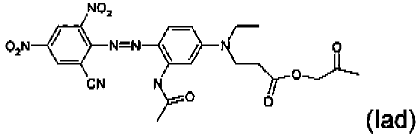 (λₘₐₓ [DMF] = 602 nm) färbt Polyester in brillanten, blauen Tönen und ergibt ausgezeichnete Wasch- und Sublimierechtheiten.

Analog wurden die erfindungsgemäßen Beispiele 4 bis 85 der Tabelle 1 hergestellt.

**Tabelle 1**

| | | | | | | | | | | | | | |
|---|---|---|---|---|---|---|---|---|---|---|---|---|---|
| 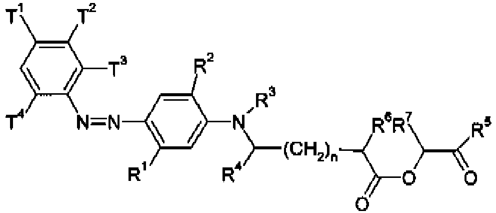 | | | | | | | | | | | | | |

| Beispiel | T¹ | T² | T³ | T⁴ | R¹ | R² | R³ | R⁵ | R⁴ | R⁶ | R⁷ | n | λₘₐₓ (nm) DMF |
|---|---|---|---|---|---|---|---|---|---|---|---|---|---|
| 4 | NO₂ | H | Cl | NO₂ | NHCOCH₃ | OCH₃ | CH₂CH=CH₂ | CH₃ | H | H | H | 0 | 598 |
| 5 | NO₂ | H | Br | NO₂ | NHCOCH₃ | OCH₃ | CH₂CH=CH₂ | CH₃ | H | H | H | 0 | 598 |
| 6 | NO₂ | H | H | NO₂ | NHCOCH₃ | OCH₃ | CH₂CH=CH₂ | CH₃ | H | H | H | 0 | 574 |
| 7 | NO₂ | H | Cl | NO₂ | NHCOCH₃ | OCH₃ | CH₂C₆H₅ | CH₃ | H | H | H | 0 | 590 |
| 8 | NO₂ | H | Br | NO₂ | NHCOCH₃ | OCH₃ | CH₂C₆H₅ | CH₃ | H | H | H | 0 | 590 |
| 9 | NO₂ | H | H | NO₂ | NHCOCH₃ | OCH₃ | CH₂C₆H₅ | CH₃ | H | H | H | 0 | 570 |
| 10 | NO₂ | H | CN | NO₂ | NHCOCH₃ | OCH₃ | CH₂C₆H₅ | CH₃ | H | H | H | 0 | 634 |
| 11 | NO₂ | H | Cl | NO₂ | NHCOCH₃ | OCH₃ | H | CH₃ | H | H | H | 0 | 592 |
| 12 | NO₂ | H | Cl | NO₂ | NHCOCH₃ | OC₂H₆ | H | CH₃ | H | H | H | 0 | 594 |
| 13 | NO₂ | H | Br | NO₂ | NHCOCH₃ | OCH₃ | H | CH₃ | H | H | H | 0 | 594 |
| 14 | NO₂ | H | Br | NO₂ | NHCOCH₃ | OCH₃ | H | C₂H₆ | H | H | H | 0 | 594 |
| 15 | NO₂ | H | Cl | NO₂ | NHCOCH₃ | OCH₃ | H | C₂H₅ | H | H | H | 0 | 600 |
| 16 | NO₂ | H | H | NO₂ | NHCOCH₃ | OCH₃ | H | C₂H₅ | H | H | H | 0 | 574 |
| 17 | NO₂ | H | H | NO₂ | NHCOCH₃ | NOCH₃ | H | CH₃ | H | H | H | 0 | 574 |
| 18 | NO₂ | H | H | CF₃ | NHCOCH₃ | OCH₃ | H | CH₃ | H | H | H | 0 | 542 |
| 19 | NO₂ | H | Br | CN | NHCOCH₃ | OCH₃ | H | CH₃ | H | H | H | 0 | 624 |
| 20 | NO₂ | H | Br | CF₃ | NHCOCH₃ | OCH₃ | H | CH₃ | H | H | H | 0 | 562 |
| 21 | NO₂ | H | Br | NO₂ | NHCOC₂H₅ | OCH₃ | H | CH₃ | H | H | H | 0 | 596 |
| 22 | NO₂ | H | Cl | NO₂ | NHCOC₂H₆ | OCH₃ | H | CH₃ | H | H | H | 0 | 569 |
| 23 | NO₂ | H | H | NO₂ | NHCOC₂H₅ | OCH₃ | H | CH₃ | H | H | H | 0 | 576 |
| 24 | NO₂ | H | Br | NO₂ | NHCOC₆H₅ | OCH₃ | H | CH₃ | H | H | H | 0 | 586 |
| 25 | NO₂ | H | Cl | NO₂ | NHCOC₆H₅ | OCH₃ | H | CH₂ | H | H | H | 0 | 586 |
| 26 | NO₂ | H | H | NO₂ | NHCOC₆H₅ | OCH₃ | H | CH₃ | H | H | H | 0 | 572. |
| 27 | NO₂ | Cl | H | NO₂ | NHCOCH₃ | OCH₃ | H | CH₃ | H | H | H | 0 | 576 |
| 28 | NO₂ | H | Cl | NO₂ | NHCOCH₃ | H | CH₂C₆H₅ | CH₃ | H | H | H | 0 | 554 |
| 29 | NO₂ | H | H | CN | NHCOCH₃ | H | CH₂C₆H₅ | CH₃ | H | H | H | 0 | 546 |
| 30 | NO₂ | H | Br | NO₂ | NHCOCH₃ | H | CH₂C₆H₅ | CH₃ | H | H | H | 0 | 552 |
| 31 | NO₂ | H | Cl | H | NHCOCH₃ | H | CH₂C₄H₆ | CH₃ | H | H | H | 0 | 524 |
| 32 | NO₂ | H | H | NO₂ | NHCOCH₃ | H | CH₂C₆H₅ | CH₃ | H | H | H | 0 | 540 |
| 33 | NO₂ | H | H | H | NHCOCH₃ | H | CH₂C₆H₅ | CH₃ | H | H | H | 0 | 506 |
| 34 | H | Cl | H | Cl | NHCOCH₃ | H | CH₂C₆H₅ | CH₃ | H | H | H | 0 | 476 |
| 35 | NO₂ | H | Br | CN | NHCOCH₃ | H | CH₂C₆H₅ | CH₃ | H | H | H | 0 | 574 |
| 36 | NO₂ | H | Cl | NO₂ | NHCOCH₃ | H | CH₂CH=CH₂ | CH₃ | H | H | H | 0 | 556 |
| 37 | NO₂ | H | H | CN | NHCOCH₃ | H | CH₂CH=CH₂ | CH₃ | H | H | H | 0 | 548 |
| 38 | NO₂ | H | H | Cl | NHSO₂CH₃ | H | CH₂C₆H₅ | CH₃ | H | H | H | 0 | 534 |
| 39 | NO₂ | H | H | H | NHSO₂CH₃ | H | CH₂C₆H₅ | CH₃ | H | H | H | 0 | 494 |
| 40 | NO₂ | H | Cl | Cl | H | H | CH₂C₆H₅ | CH₃ | H | H | H | 0 | 432 |
| 41 | NO₂ | H | Br | Cl | H | H | CH₂C₆H₅ | CH₃ | H | H | H | 0 | 434 |
| 42 | NO₂ | H | Cl | H | H | H | CH₂C₆H₅ | CH₃ | H | H | H | 0 | 500 |
| 43 | NO₂ | H | H | CN | H | H | CH₂C₆H₅ | CH₃ | H | H | H | 0 | 526 |
| 44 | NO₂ | H | H | CF₃ | H | H | CH₂C₆H₅ | CH₃ | H | H | H | 0 | 506 |
| 45 | NO₂ | H | Br | Br | H | H | CH₂C₆H₅ | CH₃ | H | H | H | 0 | 432 |
| 46 | NO₂ | H | H | Br | H | H | CH₂C₆H₅ | CH₃ | H | H | H | 0 | 498 |
| 47 | NO₂ | H | Cl | Cl | H | H | CH₂CH₂C₆H₅ | CH₃ | H | H | H | 0 | 440 |
| 48 | NO₂ | H | Br | Cl | H | H | CH₂CH₂C₆H₅ | CH₃ | H | H | H | 0 | 442 |
| 49 | NO₂ | H | Cl | Cl | H | H | CH₂CH₂OC₆H₅ | CH₃ | H | H | H | 0 | 436 |
| 50 | NO₂ | H | Br | Cl | H | H | CH₂CH₂OC₆H₅ | CH₃ | H | H | H | 0 | 432 |
| 51 | NO₂ | H | H | Cl | H | H | CH₂CH₂OC₆H₅ | CH₃ | H | H | H | 0 | 502 |
| 52 | NO₂ | H | H | CN | H | H | CH₂CH₂OC₅H₅ | CH₃ | H | H | H | 0 | 526 |
| 53 | NO₂ | H | Cl | Cl | H | H | CH₂CH₂CN | CH₃ | H | H | H | 0 | 424 |
| 54 | NO₂ | H | Br | Br | H | H | CH₂CH₂CN | CH₃ | H | H | H | 0 | 422 |
| 55 | NO₂ | Cl | Cl | H | H | H | CH₂C₆H₅ | CH₃ | H | H | H | 0 | 500 |
| 56 | NO₂ | H | H | H | Cl | OC₆H₅ | H | CH₃ | H | H | H | 0 | 478 |
| 57 | NO₂ | H | H | CN | Cl | OC₆H₅ | H | CH₃ | H | H | H | 0 | 524 |
| 58 | NO₂ | H | H | Cl | Cl | OC₆H₅ | H | CH₃ | H | H | H | 0 | 498 |
| 59 | NO₂ | H | Cl | Cl | Cl | OC₆H₅ | H | CH₃ | H | H | H | 0 | 444 |
| 60 | NO₂ | H | H | H | H | Cl | H | CH₃ | H | H | H | 0 | 450 |
| 61 | NO₂ | H | H | Cl | H | Cl | H | CH₃ | H | H | H | 0 | 472 |
| 62 | NO₂ | H | H | H | H | Cl | H | C₂H₅ | H | H | H | 0 | 450 |
| 63 | NO₂ | H | H | NO₂ | NHCOCH₃ | Cl | H | CH₃ | H | H | H | 0 | 520 |
| 64 | NO₂ | H | H | H | NHCOCH₃ | Cl | H | CH₃ | H | H | H | 0 | 486 |
| 65 | NO₂ | H | Cl | NO₂ | NHCOCH₃ | Cl | H | CH₃ | H | H | H | 0 | 536 |
| 66 | NO₂ | H | Cl | H | NHCOCH₃ | Cl | H | CH₃ | H | H | H | 0 | 508 |
| 67 | NO₂ | H | H | CN | NHCOCH₃ | Cl | H | CH₃ | H | H | H | 0 | 530 |
| 68 | NO₂ | H | Br | NO₂ | NHCOCH₃ | OCH₃ | H | CH₃ | CH₃ | H | H | 0 | 596 |
| 69 | NO₂ | H | Cl | NO₂ | NHCOCH₃ | OCH₃ | H | CH₃ | CH₃ | H | H | 0 | 596 |
| 70 | NO₂ | H | Cl | NO₂ | NHCOCH₃ | OCH₃ | H | CH₃ | H | CH₃ | H | 0 | 592 |
| 71 | NO₂ | H | Cl | NO₂ | NHCOCH₃ | OCH₃ | H | CH₃ | H | H | H | 1 | 601 |
| 72 | NO₂ | H | Br | NO₂ | NHCOCH₃ | OCH₃ | H | CH₃ | H | H | H | 1 | 600 |
| 73 | NO₂ | H | H | NO₂ | NHCOCH₃ | OCH₃ | H | CH₃ | H | H | H | 1 | 582 |
| 74 | NO₂ | H | Br | CN | NHCOCH₃ | OCH₃ | H | CH₃ | H | H | H | 1 | 630 |
| 75 | NO₂ | H | Cl | NO₂ | NHCOCH₃ | OCH₃ | H | CH₃ | H | H | CH₃ | 0 | 594 |
| 76 | NO₂ | H | Br | NO₂ | NHCOCH₃ | OCH₃ | H | CH₃ | H | H | CH₃ | 0 | 594 |
| 77 | NO₂ | H | H | NO₂ | NHCOCH₃ | OCH₃ | H | CH₃ | H | H | CH₃ | 0 | 576 |
| 78 | NO₂ | H | Cl | NO₂ | NHCOCH₃ | OCH₃ | H | CH₃ | H | H | C₆H₅ | 0 | 594 |
| 79 | NO₂ | H | Br | NO₂ | NHCOCH₃ | OCH₃ | H | CH₃ | H | H | C₆H₅ | 0 | 594 |
| 80 | NO₂ | H | H | NO₂ | NHCOCH₃ | OCH₃ | H | CH₃ | H | H | C₆H₅ | 0 | 576 |
| 81 | NO₂ | H | Br | NO₂ | NHCOCH₃ | CH₃ | H | CH₃ | H | H | H | 0 | 558 |
| 82 | NO₂ | H | Cl | NO₂ | NHCOCH₃ | CH₃ | H | CH₃ | H | H | H | 0 | 558 |
| 83 | NO₂ | H | Cl | H | NHCOCH₃ | CH₃ | H | CH₃ | H | H | H | 0 | 532 |
| 84 | NO₂ | H | Br | CN | NHCOCH₃ | CH₃ | H | CH₃ | H | H | H | 0 | 584 |
| 85 | NO₂ | H | H | NO₂ | NHCOCH₃ | CH₃ | H | CH₃ | H | H | H | 0 | 538 |

### Beispiel 86 [nicht erfikndungsgemäß]:

4.3 g 3-Amino-5-nitrobenzisothiazol werden in eine Mischung aus 11 ml Schwefelsäure (96%ig) und 4 ml Phosphorsäure (85%ig) eingetragen. Dann wird bei 10 bis 15 °C 4.6 ml Nitrosylschwefelsäure (40%ig) zugetropft. Man lässt 4 Stunden bei 10 bis 15 °C nachrühren. Die so erhaltene Diazoniumsalzlösung wird zügig zu einer Mischung aus 6.6 g 3-[(5-Acetylaminophenyl)-ethylamino]-propionsäure 2-oxo-propylester, 100 ml Methanol, 1.1g Harnstoff und 100 g Eis zugetropft. Man lässt über Nacht bei Raumtemperatur nachrühren saugt ab und wäscht mit Methanol/Wasser 1:1 nach. Nach Trocknung erhält man 7.9 g des Farbstoffs der Formel (Ibb) 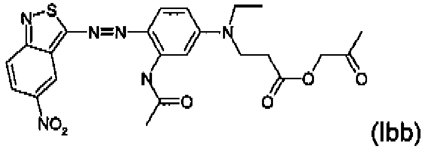 λₘₐₓ [DMF] = 622 nm), der Polyester in grünstichig blauen Tönen färbt und sehr gute Wasch- und Sublimierechtheiten aufweist.

Analog wurden die Beispiele 87 bis 91 der Tabelle 2 hergestellt.

**Tabelle 2**

| | | | | | | |
|---|---|---|---|---|---|---|
| 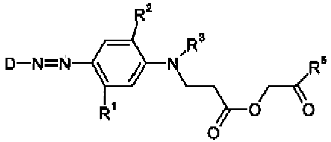 | | | | | | |

| Beispiel | D | R¹ | R² | R³ | R⁵ | λₘₐₓ [DMF] |
|---|---|---|---|---|---|---|
| 87 | 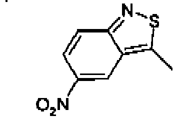 | NHCOCH₃ | OCH₃ | H | CH₃ | 648 |
| 88 | 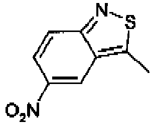 | H | H | CH₂C₆H₅ | CH₃ | 594 |
| 89 | 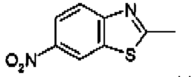 | H | H | CH₂C₆H₅ | CH₃ | 540 |
| 90 | 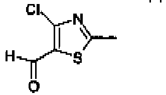 | NHCOCH₃ | OCH₃ | H | CH₃ | 608 |
| 91 | 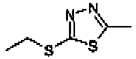 | NHCOCH₃ | H | CH₂C₆H₅ | CH₃ | 520 |

### Beispiel 92 [nicht erfikndungsgemäß]:

Ein textiles Flächengebilde, bestehend aus Polyester wird mit einer Flotte bestehend aus 50g/l einer 8%igen Natriumalginatlösung, 100 g/l einer 8-12%eigen Kernmehretherlösung und 5g/l Mononatriumphosphat in Wasser foulardiert und dann getrocknet. Die Flottenaufnahme beträgt 70%.
Auf das so vorbehandelte Textil wird eine nach oben beschriebener Vorgehensweise hergestellte wässrige Tinte, enthaltend
3,5% des Farbstoffes gemäß Beispiel 1,
2,5% Dispergiermittel Disperbyk 190,
30% 1,5-Pentandiol,
5% Diethylenglykolmonomethylether,
0,01 % Biozid Mergal K9N und
58,99% Wasser
mit einem Drop-on-Demand (Piezo) Inkjet Druckkopf aufgedruckt. Der Druck wird vollständig getrocknet. Die Fixierung erfolgt mittels überhitzten Dampfes bei 175 °C während 7 Minuten. Anschließend wird der Druck einer alkalisch reduktiven Nachbehandlung unterzogen, warm gespült und dann getrocknet.

## Patentansprüche

1. Farbstoff der allgemeinen Formel (I) 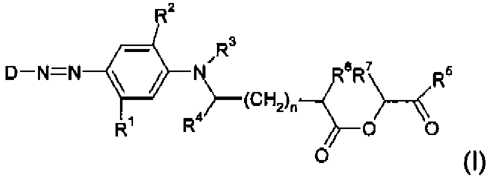 worin
D für eine Gruppe der Formel (IIa) steht 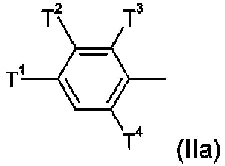
worin
T¹ und T² unabhängig voneinander Wasserstoff, (C₁-C₆)-Alkyl, (C₁-C₄)-Alkoxy, -SO₂(C₁-C₆)-Alkyl, -SO₂Aryl, Cyano, Halogen oder Nitro; und
T⁴ und T³ unabhängig voneinander Wasserstoff, Halogen, Trifluormethyl, Cyano, - SCN, -SO₂CH₃ oder Nitro;
bedeuten, wobei mindestens einer der Reste T¹, T², T³ und T⁴ nicht Wasserstoff bedeutet;
oder für eine Grupppe der Formel (IIb) 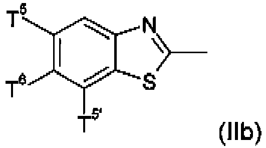 worin
T⁵ und T^{5'} unabhängig voneinander Wasserstoff oder Halogen; und
T⁶ Wasserstoff, -SO₂CH₃, -SCN, (C₁-C₄)-Alkoxy, Halogen oder Nitro; bedeuten, wobei mindestens einer der Reste T⁵, T^{5'} und T⁶ nicht Wasserstoff bedeutet;
oder für eine Gruppe der Formel (IIc) 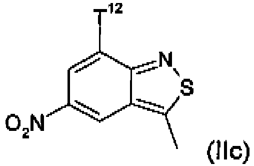 worin
T¹² Wasserstoff oder Halogen bedeutet;
oder für eine Gruppe der Formel (IId) 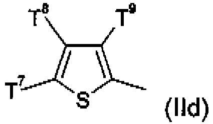 worin
T⁷ Nitro, -CHO, Cyano, -COCH₃ oder eine Gruppe der Formel 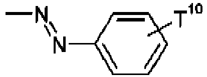
bedeutet, worin T¹⁰ Wasserstoff, Halogen, Nitro oder Cyano ist;
T⁸ Wasserstoff, (C₁-C₆)-Alkyl oder Halogen; und
T⁹ Nitro, Cyano, -COCH₃ ader -COOT¹¹; bedeuten, worin T¹¹ (C₁-C₄)-Alkyl ist;
oder für eine Gruppe der Formel (IIe) 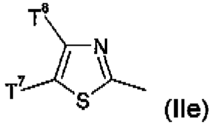 worin T⁷ und T⁸ wie oben angegeben definiert sind;
oder für eine Gruppe der Formel (IIf) 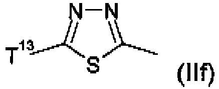
worin T¹³ Phenyl oder S-(C₁-C₄)-Alkyl bedeutet,
R¹ für Wasserstoff, Chlor, Methyl, Ethyl, Methoxy, Hydroxy, Ethoxy, Acetylamino, Propionylamino, Benzoylamino, Methylsulfonylamino, Ethylsulfonylamino oder Phenylsulfonylamino;
R² für Wasserstoff, Chlor, Methyl, Ethyl, Methoxy, Ethoxy oder Phenoxy;
R³ für Wasserstoff, Benzyl, Phenylethyl, Phenoxyethyl, Methoxyethyl, Cyanoethyl, - C₂H₄OCOCH₃, -C₂H₄OCOC₂H₅,
-C₂H₄COOCH₃, -C₂H₄COOC₂H₅ oder Allyl;
R⁴ und R⁷ für Wasserstoff, Methyl oder Phenyl;
R⁵ für Methyl oder Ethyl;
R⁶ für Wasserstoff oder Methyl; und
n für 0 oder 1 stehen.

2. Farbstoff gemäß Anspruch 1, **dadurch gekennzeichnet, dass** er der allgemeinen Formel (la) 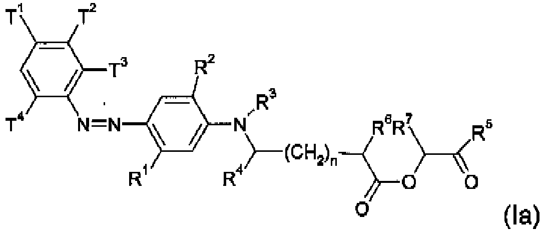 entspricht, worin T¹ bis T⁴, R¹ bis R⁷ und n wie in Anspruch 1 angegeben definiert sind.

3. Farbstoff gemäß Anspruch 2, **dadurch gekennzeichnet, dass**
R¹ Acetylamino, Propionylamino, Benzoylamino oder Methylsulfonylamino;
R² Wasserstoff, Chlor, Methoxy oder Ethoxy;
R³ Wasserstoff, Allyl oder Benzyl;
R⁴ Wasserstoff oder Methyl;
R⁵ Methyl oder Ethyl;
R⁶ Wasserstoff oder Methyl und
R⁷ Wasserstoff, Methyl oder Phenyl stehen.

4. Farbstoff gemäß Anspruch 2, **dadurch gekennzeichnet, dass** er der allgemeinen Formel (Iaa) 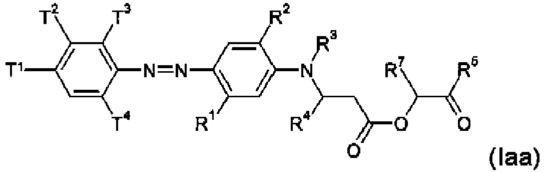 entspricht, worin
T¹ für Wasserstoff, Nitro oder Methyl;
T² für Wasserstoff, Nitro oder Chlor;
T³ für Wasserstoff, Cyano, Chlor oder Brom;
T⁴ für Wasserstoff, Cyano, Nitro, Chlor, Brom oder Trifluormethyl;
R¹ für Wasserstoff, Hydroxy, Chlor, Methyl, Acetylamino, Propionylamino, Benzoylamino oder Methylsulfonylamino;
R² für Wasserstoff, Chlor, Methyl, Phenoxy, Methoxy oder Ethoxy;
R³ für Wasserstoff, Benzyl, Phenylethyl, Phenoxyethyl oder Allyl;
R⁵ für Methyl oder Ethyl; und
R⁴ und R⁷ für Wasserstoff, Methyl oder Phenyl
stehen.

5. Farbstoff gemäß Anspruch 3 und/oder 4, **dadurch gekennzeichnet, dass** T³ für Chlor oder Brom und R¹ für Wasserstoff oder Methyl stehen.

6. Farbstoff gemäß Anspruch 1, **dadurch gekennzeichnet, dass** er der allgemeinen Formel (Ib) 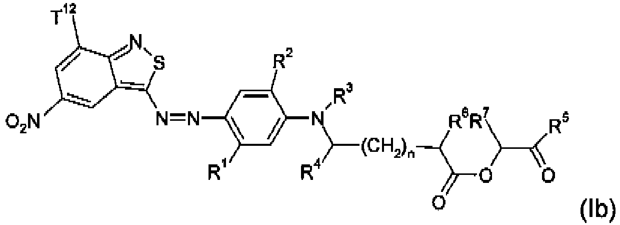 entspricht,
worin T¹², R¹ bis R⁷ und n wie in Anspruch 1 definiert sind.

7. Farbstoff gemäß Anspruch 1, **dadurch gekennzeichnet, dass** er der allgemeinen Formel (Iba) 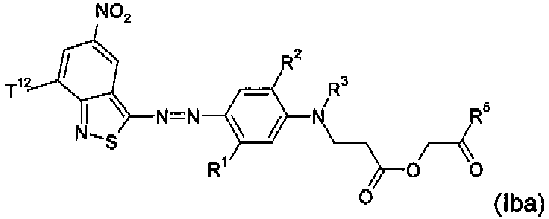 entspricht,
worin
T¹² für Wasserstoff, Chlor oder Brom;
R¹ für Wasserstoff, Hydroxy, Methyl, Acetylamino oder Propionylamino;
R² für Wasserstoff, Methyl, Chlor oder Methoxy;
R³ für Wasserstoff, Benzyl oder Allyl; und
R⁵ für Methyl oder Ethyl;
stehen.

8. Farbstoff gemäß Anspruch 1, **dadurch gekennzeichnet, dass** er der allgemeinen Formel (Ic) 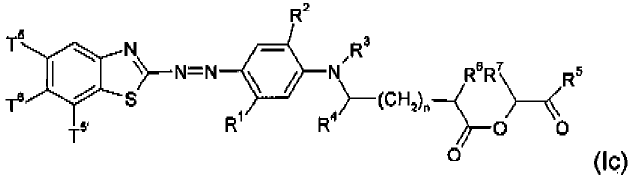 entspricht,
worin T⁵, T^{5'}, T⁶, R¹ bis R⁷ und n wie in Anspruch 1 definiert sind.

9. Farbstoff gemäß Anspruch 1, **dadurch gekennzeichnet, dass** er der allgemeinen Formel (Ica) 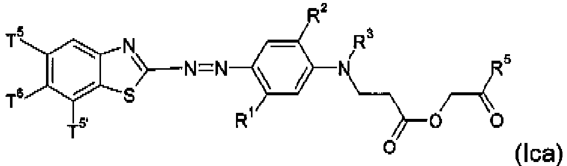 entspricht, worin
T⁵ und T^{5'} unabhängig voneinander Wasserstoff oder Halogen;
T⁶ Halogen oder Nitro;
R¹ für Wasserstoff, Hydroxy, Methyl, Acetylamino oder Propionylamino;
R² für Wasserstoff, Methyl, Chlor oder Methoxy;
R³ für Wasserstoff, Benzyl oder Allyl; und
R⁵ für Methyl oder Ethyl;
stehen.

10. Farbstoff gemäß Anspruch 1, **dadurch gekennzeichnet, dass** er der allgemeinen Formel (Id) 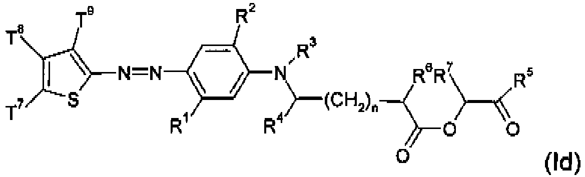 entspricht, worin T⁷ bis T⁹, R¹ bis R⁷ und n wie in Anspruch 1 definiert sind.

11. Farbstoff gemäß Anspruch 1, **dadurch gekennzeichnet, dass** er der allgemeinen Formel (Ida) 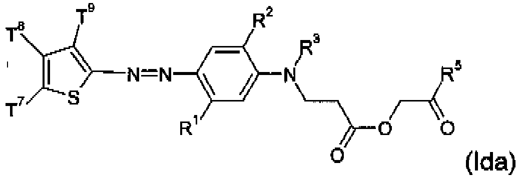 entspricht, worin
T⁷ Nitro, -CHO oder Cyano;
T⁸ Wasserstoff, Methyl oder Chlor;
T⁹ Nitro, Cyano oder -COCH₃;
R¹ Wasserstoff, Hydroxy, Methyl, Acetylamino oder Propionylamino;
R² Wasserstoff, Methyl, Chlor oder Methoxy;
R³ Wasserstoff, Benzyl, Phenoxyethyl oder Allyl; und
R⁵ Methyl oder Ethyl;
bedeuten.

12. Farbstoff gemäß Anspruch 1, **dadurch gekennzeichnet, dass** er der allgemeinen Formel (Idb) 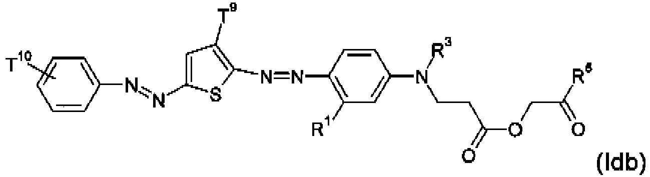 entspricht, worin
T¹⁰ Nitro;
T⁹ Cyano oder -COCH₃;
R¹ Wasserstoff, Methyl, oder Acetylamino;
R³ Allyl; und
R⁵ Methyl oder Ethyl;
bedeuten.

13. Farbstoff gemäß Anspruch 1, **dadurch gekennzeichnet, dass** er der allgemeinen Formel (Ie) 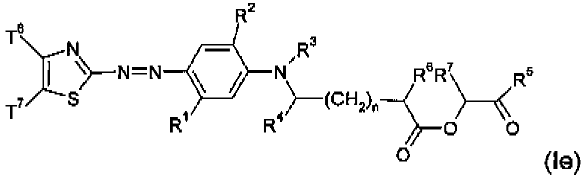 entspricht, worin
worin T⁷, T⁸, R¹ bis R⁷ und n wie in Anspruch 1 definiert sind.

14. Farbstoff gemäß Anspruch 1, **dadurch gekennzeichnet, dass** er der allgemeinen Formel (Iea) 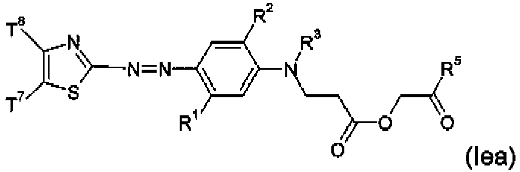 entspricht, worin
T⁷ Nitro, -CHO oder Cyano;
T⁸ Wasserstoff oder Chlor;
R¹ Wasserstoff, Hydroxy, Methyl, Acetylamino oder Propionylamino;
R² Wasserstoff, Methyl, Chlor oder Methoxy;
R³ Wasserstoff, Benzyl, Phenoxyethyl oder Allyl; und
R⁵ Methyl oder Ethyl;
bedeuten.

15. Farbstoff gemäß Anspruch 1, **dadurch gekennzeichnet, dass** er der allgemeinen Formel (If) 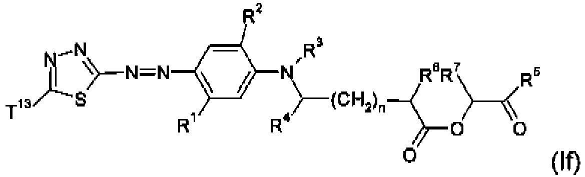 entspricht, worin
T¹³, R¹ bis R⁷ und n wie in Anspruch 1 definiert sind.

16. Farbstoff gemäß Anspruch 1, **dadurch gekennzeichnet, dass** er der allgemeinen Formel (Ifa) 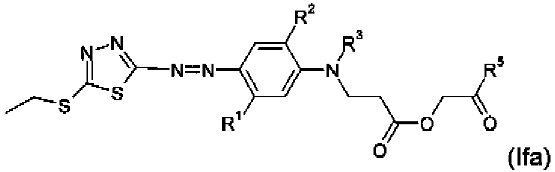 entspricht, worin
R¹ Wasserstoff, Hydroxy, Methyl, Acetylamino oder Propionylamino;
R² Wasserstoff, Methyl, Chlor oder Methoxy;
R³ Wasserstoff, Benzyl, Phenoxyethyl oder Allyl; und
R⁵ Methyl oder Ethyl;
bedeuten.

17. Verfahren zur Herstellung eines Farbstoffes der allgemeinen Formel (I) gemäß Anspruch 1, **dadurch gekennzeichnet, dass** man eine Verbindung der allgemeinen Formel (III)
D-NH₂ (III)
worin D wie in Anspruch 1 angegeben definiert ist, diazotiert und auf eine Verbindung der allgemeinen Formel (IV) 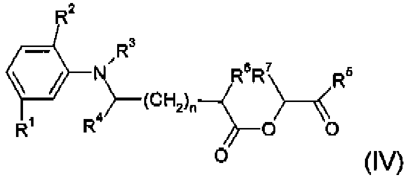 worin R¹ bis R⁷ und n wie in Anspruch 1 angegeben definiert sind, kuppelt.

18. Verwendung eines Farbstoffes der allgemeinen Formel I gemäß Anspruch 1 zum Färben und Bedrucken von hydrophoben Materialien.

19. Tinte für den digitalen Textildruck nach dem Ink-Jet Verfahren, **dadurch gekennzeichnet, dass** sie einen Farbstoff der allgemeinen Formel (I) gemäß Anspruch 1 enthält

## Claims

1. Dye of the general formula (I) 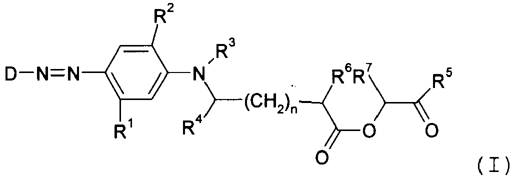 where
D represents a group of the formula (IIa) 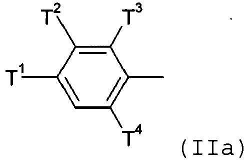 where
T¹ and T² independently are hydrogen, (C₁-C₆)-alkyl, (C₁-C₄) -alkoxy,
-SO₂ (C₁-C₆) -alkyl, -SO₂aryl, cyano, halogen or nitro; and T⁴ and T³ independently are hydrogen, halogen, trifluoromethyl, cyano, -SCN, -SO₂CH₃ or nitro;
although at least one of T¹, T², T³ and T⁴ is not hydrogen;
or represents a group of the formula (IIb) 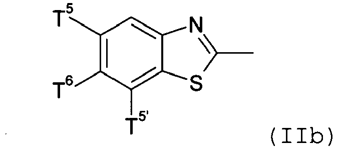 where
T⁵ and T^{5'} independently are hydrogen or halogen; and
T⁶ is hydrogen, -SO₂CH₃, -SCN, (C₁-C₄) -alkoxy, halogen or nitro;
although at least one of T⁵, T^{5'} and T⁶ is not hydrogen;
or represents a group of the formula (IIc) 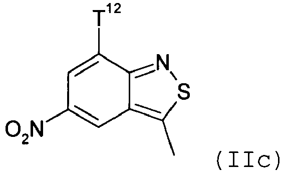 where
T¹² is hydrogen or halogen;
or represents a group of the formula (IId) 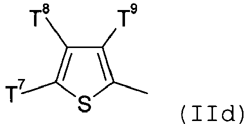 where
T⁷ is nitro, -CHO, cyano, -COCH₃ or a group of the formula 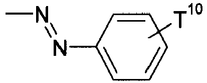
where T¹⁰ is hydrogen, halogen, nitro or cyano;
T⁸ is hydrogen, (C₁-C₆)-alkyl or halogen; and
T⁹ is nitro, cyano, -COCH₃ or -COOT¹¹; where T¹¹ is (C₁-C₄)-alkyl;
or represents a group of the formula (IIe) 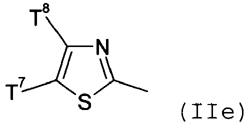 where T⁷ and T⁸ are each as defined above;
or represents a group of the formula (IIf) 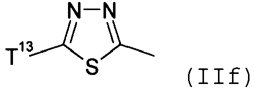
where T¹³ is phenyl or S- (C₁-C₄) -alkyl,
R¹ is hydrogen, chlorine, methyl, ethyl, methoxy, hydroxyl, ethoxy, acetylamino, propionylamino, benzoylamino, methylsulfonylamino, ethylsulfonylamino or phenylsulfonylamino;
R² is hydrogen, chlorine, methyl, ethyl, methoxy, ethoxy or phenoxy;
R³ is hydrogen, benzyl, phenylethyl, phenoxyethyl, methoxyethyl, cyanoethyl, -C₂H₄OCOCH₃, -C₂H₄OCOC₂H₅, -C₂H₄COOCH₃, -C₂H₄COOC₂H₅ or allyl;
R⁴ and R⁷ are hydrogen, methyl or phenyl;
R⁵ is methyl or ethyl;
R⁶ is hydrogen or methyl; and
n is 0 or 1.

2. Dye according to Claim 1, **characterized in that** it conforms to the general formula (Ia) 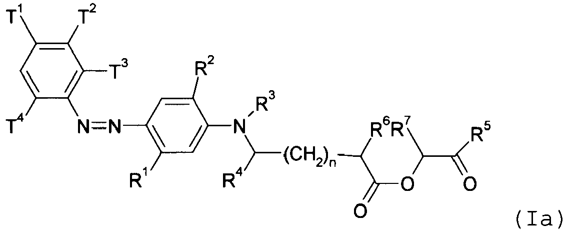 where T¹ to T⁴, R¹ to R⁷ and n are each as defined in Claim 1.

3. Dye according to Claim 2, **characterized in that**
R¹ is acetylamino, propionylamino, benzoylamino or methylsulfonylamino;
R² is hydrogen, chlorine, methoxy or ethoxy;
R³ is hydrogen, allyl or benzyl;
R⁴ is hydrogen or methyl;
R⁵ methyl or ethyl;
R⁶ is hydrogen or methyl and
R⁷ is hydrogen, methyl or phenyl.

4. Dye according to Claim 2, **characterized in that** it conforms to the general formula (Iaa) 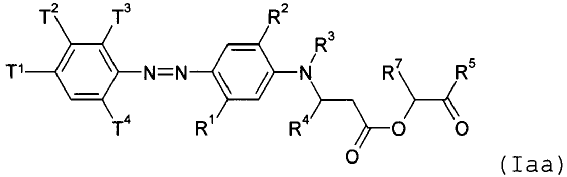 where
T¹ is hydrogen, nitro or methyl;
T² is hydrogen, nitro or chlorine;
T³ is hydrogen, cyano, chlorine or bromine;
T⁴ is hydrogen, cyano, nitro, chlorine, bromine or trifluoromethyl;
R¹ is hydrogen, hydroxyl, chlorine, methyl, acetylamino, propionylamino, benzoylamino or methylsulfonylamino;
R² is hydrogen, chlorine, methyl, phenoxy, methoxy or ethoxy;
R³ is hydrogen, benzyl, phenylethyl, phenoxyethyl or allyl;
R⁵ is methyl or ethyl; and
R⁴ and R⁷ are hydrogen, methyl or phenyl.

5. Dye according to Claim 3 and/or 4, **characterized in that** T³ is chlorine or bromine and R¹ is hydrogen or methyl.

6. Dye according to Claim 1, **characterized in that** it conforms to the general formula (Ib) 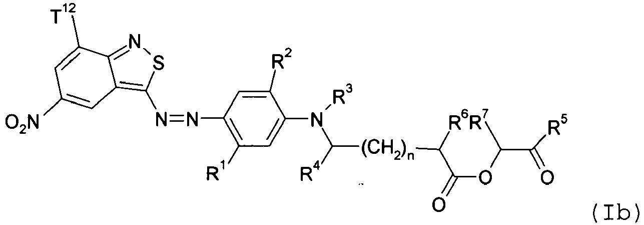 where T¹², R¹ to R⁷ and n are each as defined in Claim 1.

7. Dye according to Claim 1, **characterized in that** it conforms to the general formula (Iba) 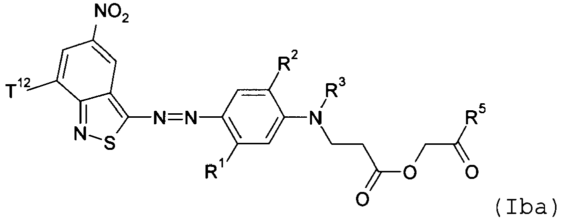 where
T¹² is hydrogen, chlorine or bromine;
R¹ is hydrogen, hydroxyl, methyl, acetylamino or propionylamino;
R² is hydrogen, methyl, chlorine or methoxy;
R³ is hydrogen, benzyl or allyl; and
R⁵ is methyl or ethyl.

8. Dye according to Claim 1, **characterized in that** it conforms to the general formula (Ic) 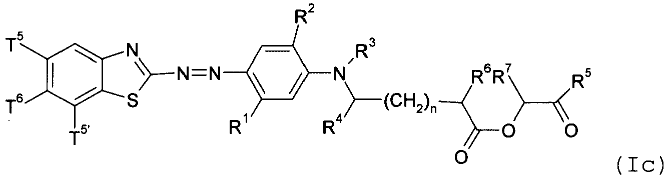 where T⁵, T^{5'}, T⁶, R¹ to R⁷ and n are each as defined in Claim 1.

9. Dye according to Claim 1, **characterized in that** it conforms to the general formula (Ica) 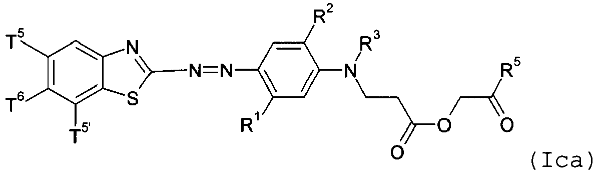 where
T⁵ and T^{5'} independently are hydrogen or halogen;
T⁶ is halogen or nitro;
R¹ is hydrogen, hydroxyl, methyl, acetylamino or propionylamino;
R² is hydrogen, methyl, chlorine or methoxy;
R³ is hydrogen, benzyl or allyl; and
R⁵ is methyl or ethyl.

10. Dye according to Claim 1, **characterized in that** it conforms to the general formula (Id) 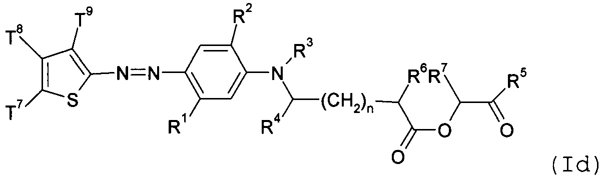 where T⁷ to T⁹, R¹ to R⁷ and n are each as defined in Claim 1.

11. Dye according to Claim 1, **characterized in that** it conforms to the general formula (Ida) 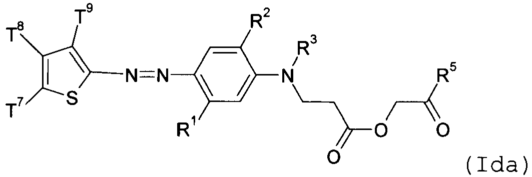 where
T⁷ is nitro, -CHO or cyano;
T⁸ is hydrogen, methyl or chlorine;
T⁹ is nitro, cyano or -COCH₃;
R¹ is hydrogen, hydroxyl, methyl, acetylamino or propionylamino;
R² is hydrogen, methyl, chlorine or methoxy;
R³ is hydrogen, benzyl, phenoxyethyl or allyl; and
R⁵ is methyl or ethyl.

12. Dye according to Claim 1, **characterized in that** it conforms to the general formula (Idb) 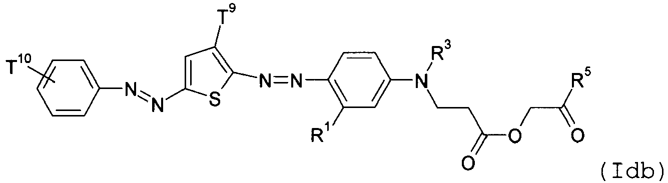 where
T¹⁰ is nitro;
T⁹ is cyano or -COCH₃;
R¹ is hydrogen, methyl or acetylamino;
R³ is allyl; and
R⁵ methyl or ethyl.

13. Dye according to Claim 1, **characterized in that** it conforms to the general formula (Ie) 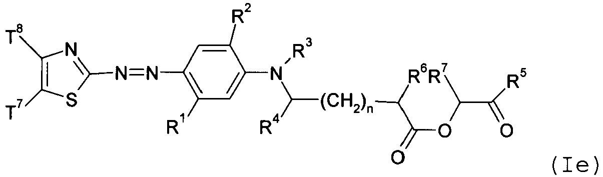 where T⁷, T⁸, R¹ to R⁷ and n are each as defined in Claim 1.

14. Dye according to Claim 1, **characterized in that** it conforms to the general formula (lea) 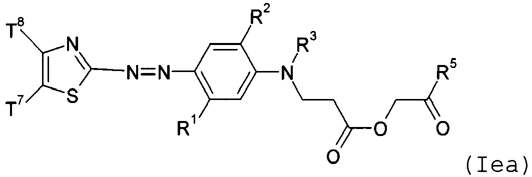 where
T⁷ is nitro, -CHO or cyano;
T⁸ is hydrogen or chlorine;
R¹ is hydrogen, hydroxyl, methyl, acetylamino or propionylamino;
R² is hydrogen, methyl, chlorine or methoxy;
R³ is hydrogen, benzyl, phenoxyethyl or allyl; and
R⁵ is methyl or ethyl.

15. Dye according to Claim 1, **characterized in that** it conforms to the general formula (If) 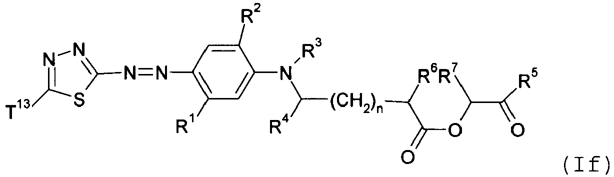 where
T¹³, R¹ to R⁷ and n are each as defined in Claim 1.

16. Dye according to Claim 1, **characterized in that** it conforms to the general formula (Ifa) 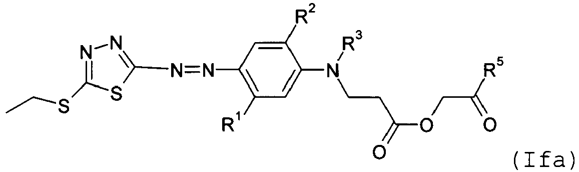 where
R¹ is hydrogen, hydroxyl, methyl, acetylamino or propionylamino;
R² is hydrogen, methyl, chlorine or methoxy;
R³ is hydrogen, benzyl, phenoxyethyl or allyl; and
R⁵ is methyl or ethyl.

17. Process for preparing a dye of the general formula (I) according to Claim 1, **characterized in that** it comprises a compound of the general formula (III)
D-NH₂ (III)
where D is as defined in Claim 1, being diazotized and coupled onto a compound of the general formula (IV) 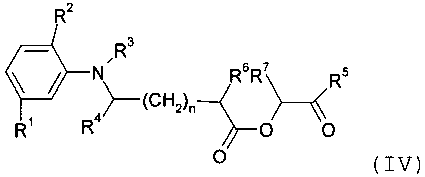 where R¹ to R⁷ and n are each as defined in Claim 1.

18. Use of a dye of the general formula I according to Claim 1 for dyeing and printing hydrophobic materials.

19. Ink for digital textile printing by the ink jet process, **characterized in that** it comprises a dye of the general formula (I) according to Claim 1.

## Revendications

1. Colorant de formule générale (I) 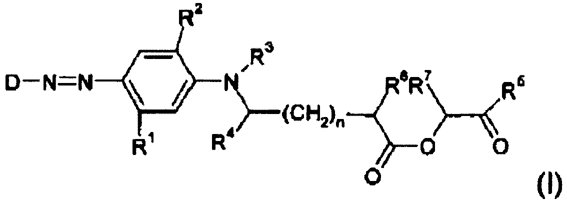 dans laquelle
D représente un groupe de formule (IIa) 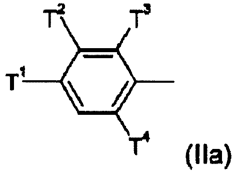 dans laquelle
T¹ et T² signifient indépendamment l'un de l'autre hydrogène, alkyle en (C₁-C₆), alcoxy en (C₁-C₄), -SO₂-alkyle en (C₁-C₆), -SO₂-aryle, cyano, halogène ou nitro ; et
T⁴ et T³ signifient indépendamment l'un de l'autre hydrogène, halogène, trifluorométhyle, cyano, -SCN, - SO₂CH₃ ou nitro ;
au moins un des radicaux T¹, T², T³ et T⁴ ne signifiant pas hydrogène ;
ou un groupe de formule (IIb) 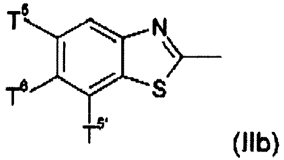 dans laquelle
T⁵ et T^{5'} signifient indépendamment l'un de l'autre hydrogène ou halogène ; et
T⁶ signifie hydrogène, -SO₂CH₃, -SCN, alcoxy en (C₁-C₄), halogène ou nitro ;
au moins un des radicaux T⁵, T^{5'} et T⁶ ne signifiant pas hydrogène ;
ou un groupe de formule (IIc) 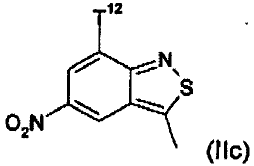 dans laquelle
T¹² signifie hydrogène ou halogène ;
ou un groupe de formule (IId) 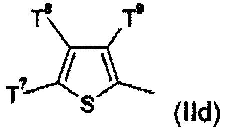 dans laquelle
T⁷ signifie nitro, -CHO, cyano, -COCH₃ ou un groupe de formule 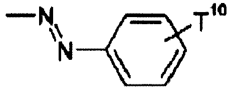
dans laquelle T¹⁰ signifie hydrogène, halogène, nitro ou cyano ;
T⁸ signifie hydrogène, alkyle en (C₁-C₆) ou halogène ; et T⁹ signifie nitro, cyano, -COCH₃ ou -COOT¹¹ ; T¹¹ signifiant alkyle en (C₁-C₄) ;
ou un groupe de formule (IIe) 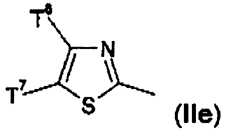 dans laquelle T⁷ et T⁸ sont tels que définis précédemment ;
ou un groupe de formule (IIf) 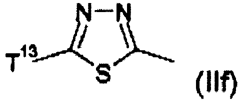
dans laquelle T¹³ signifie phényle ou S-alkyle en (C₁-C₄), R¹ représente hydrogène, chlore, méthyle, éthyle, méthoxy, hydroxy, éthoxy, acétylamino, propionylamino, benzoylamino, méthylsulfonylamino, éthylsulfonylamino ou phénylsulfonylamino ;
R² représente hydrogène, chlore, méthyle, éthyle, méthoxy, éthoxy ou phénoxy ;
R³ représente hydrogène, benzyle, phényléthyle, phénoxyéthyle, méthoxyéthyle, cyanoéthyle, -C₂H₄OCOCH₃, - C₂H₄OCOC₂H₅, -C₂H₄COOCH₃, -C₂H₄COOC₂H₅ ou allyle ;
R⁴ et R⁷ représentent hydrogène, méthyle ou phényle ;
R⁵ représente méthyle ou éthyle ;
R⁶ représente hydrogène ou méthyle ; et
n représente 0 ou 1.

2. Colorant selon la revendication 1, **caractérisé en ce qu'**il correspond à la formule générale (Ia) 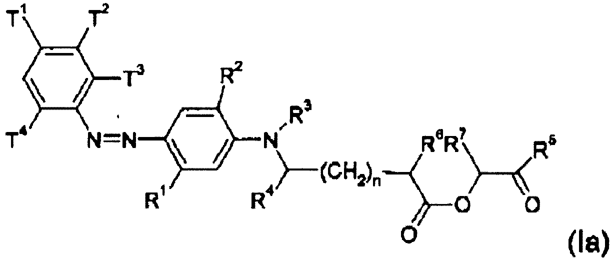 dans laquelle T¹ à T⁴, R¹ à R⁷ et n sont tels que définis dans la revendication 1.

3. Colorant selon la revendication 2, **caractérisé en ce que**
R¹ représente acétylamino, propionylamino, benzoylamino ou méthylsulfonylamino,
R² représente hydrogène, chlore, méthoxy ou éthoxy ;
R³ représente hydrogène, allyle ou benzyle ;
R⁴ représente hydrogène ou méthyle ;
R⁵ représente méthyle ou éthyle ;
R⁶ représente hydrogène ou méthyle ; et
R⁷ représente hydrogène, méthyle ou phényle.

4. Colorant selon la revendication 2, **caractérisé en ce qu'**il correspond à la formule générale (Iaa) 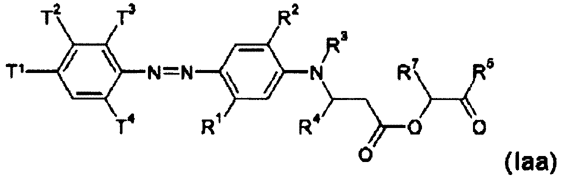 dans laquelle
T¹ représente hydrogène, nitro ou méthyle ;
T² représente hydrogène, nitro ou chlore ;
T³ représente hydrogène, cyano, chlore ou brome ;
T⁴ représente hydrogène, cyano, nitro, chlore, brome ou trifluorométhyle ;
R¹ représente hydrogène, hydroxy, chlore, méthyle, acétylamino, propionylamino, benzoylamino ou méthylsulfonylamino ;
R² représente hydrogène, chlore, méthyle, phénoxy, méthoxy ou éthoxy ;
R³ représente hydrogène, benzyle, phényléthyle, phénoxyéthyle ou allyle ;
R⁵ représente méthyle ou éthyle ; et
R⁴ et R⁷ représentent hydrogène, méthyle ou phényle.

5. Colorant selon les revendications 3 et/ou 4, **caractérisé en ce que** T³ représente chlore ou brome, et R¹ représente hydrogène ou méthyle.

6. Colorant selon la revendication 1, **caractérisé en ce qu'**il correspond à la formule générale (Ib) 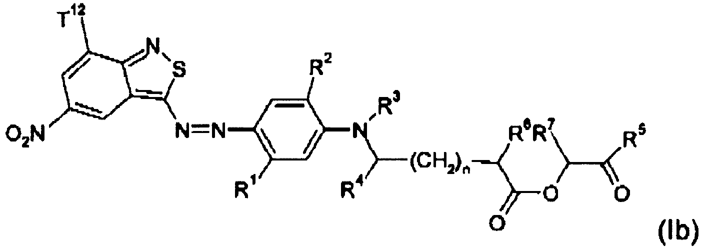 dans laquelle T¹², R¹ à R⁷ et n sont tels que définis dans la revendication 1.

7. Colorant selon la revendication 1, **caractérisé en ce qu'**il correspond à la formule générale (Iba) 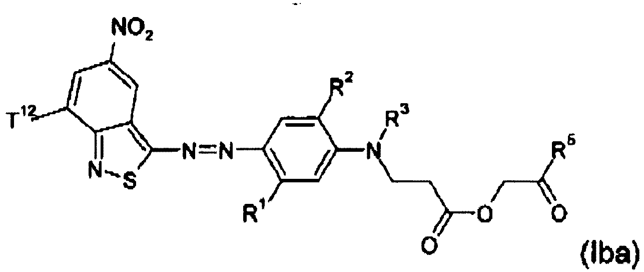 dans laquelle
T¹² représente hydrogène, chlore ou brome ;
R¹ représente hydrogène, hydroxy, méthyle, acétylamino ou propionylamino ;
R² représente hydrogène, méthyle, chlore ou méthoxy ;
R³ représente hydrogène, benzyle ou allyle ; et
R⁵ représente méthyle ou éthyle.

8. Colorant selon la revendication 1, **caractérisé en ce qu'**il correspond à la formule générale (Ic) 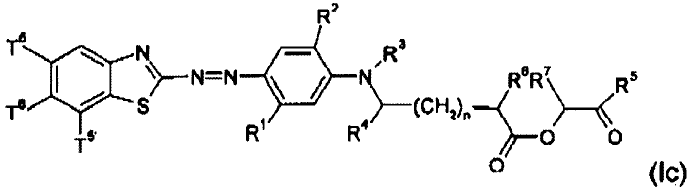 dans laquelle T⁵, T^{5'}, T⁶, R¹ à R⁷ et n sont tels que définis dans la revendication 1.

9. Colorant selon la revendication 1, **caractérisé en ce qu'**il correspond à la formule générale (Ica) 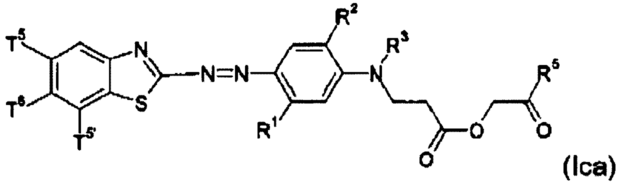 dans laquelle
T⁵ et T^{5'} représentent indépendamment l'un de l'autre hydrogène ou halogène ;
T⁶ représente halogène ou nitro ;
R¹ représente hydrogène, hydroxy, méthyle, acétylamino ou propionylamino ;
R² représente hydrogène, méthyle, chlore ou méthoxy ;
R³ représente hydrogène, benzyle ou allyle ; et
R⁵ représente méthyle ou éthyle.

10. Colorant selon la revendication 1, **caractérisé en ce qu'**il correspond à la formule générale (Id) 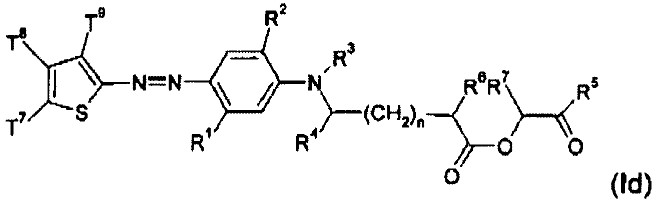 dans laquelle T⁷ à T⁹, R¹ à R⁷ et n sont tels que définis dans la revendication 1.

11. Colorant selon la revendication 1, **caractérisé en ce qu'**il correspond à la formule générale (Ida) 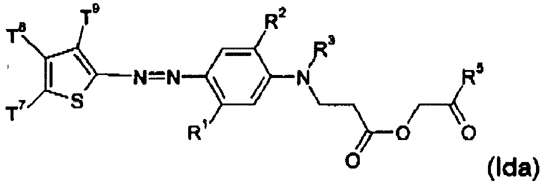 dans laquelle
T⁷ signifie nitro, -CHO ou cyano ;
T⁸ signifie hydrogène, méthyle ou chlore ;
T⁹ signifie nitro, cyano ou -COCH₃ ;
R¹ signifie hydrogène, hydroxy, méthyle, acétylamino ou propionylamino ;
R² signifie hydrogène, méthyle, chlore ou méthoxy ;
R³ signifie hydrogène, benzyle, phénoxyéthyle ou allyle ; et
R⁵ signifie méthyle ou éthyle.

12. Colorant selon la revendication 1, **caractérisé en ce qu'**il correspond à la formule générale (Idb) 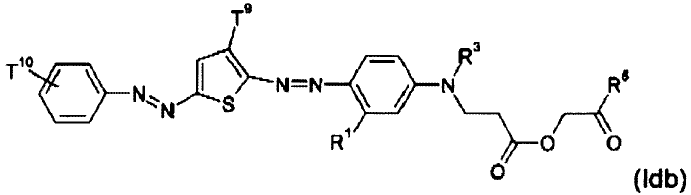 dans laquelle
T¹⁰ signifie nitro ;
T⁹ signifie cyano ou -COCH₃;
R¹ signifie hydrogène, méthyle ou acétylamino ;
R³ signifie allyle ; et
R⁵ signifie méthyle ou éthyle.

13. Colorant selon la revendication 1, **caractérisé en ce qu'**il correspond à la formule générale (Ie) 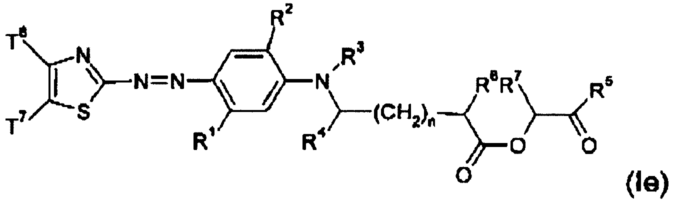 dans laquelle
T⁷, T⁸, R¹ à R⁷ et n sont tels que définis dans la revendication 1.

14. Colorant selon la revendication 1, **caractérisé en ce qu'**il correspond à la formule générale (Iea) 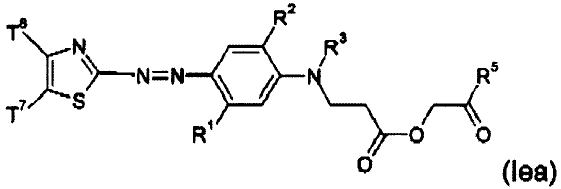 dans laquelle
T⁷ signifie nitro, -CHO ou cyano ;
T⁸ signifie hydrogène ou chlore ;
R¹ signifie hydrogène, hydroxy, méthyle, acétylamino ou propionylamino ;
R² signifie hydrogène, méthyle, chlore ou méthoxy ;
R³ signifie hydrogène, benzyle, phénoxyéthyle ou allyle ; et
R⁵ signifie méthyle ou éthyle.

15. Colorant selon la revendication 1, **caractérisé en ce qu'**il correspond à la formule générale (If) 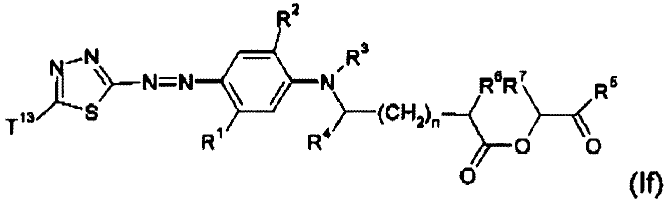 dans laquelle
T¹³, R¹ à R⁷ et n sont tels que définis dans la revendication 1.

16. Colorant selon la revendication 1, **caractérisé en ce qu'**il correspond à la formule générale (Ifa) 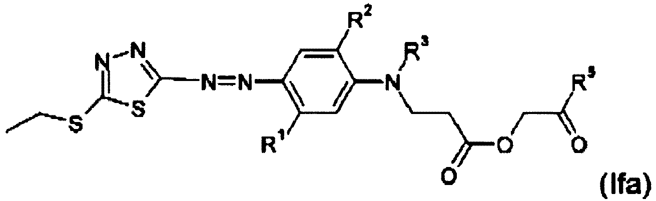 dans laquelle
R¹ signifie hydrogène, hydroxy, méthyle, acétylamino ou propionylamino ;
R² signifie hydrogène, méthyle, chlore ou méthoxy ;
R³ signifie hydrogène, benzyle, phénoxyéthyle ou allyle ; et
R⁵ signifie méthyle ou éthyle.

17. Procédé de fabrication d'un colorant de formule générale (I) selon la revendication 1, **caractérisé en ce qu'**un composé de formule générale (III)
D-NH₂ (III)
dans laquelle D est tel que défini dans la revendication 1, est diazoté et couplé avec un composé de formule générale (IV) 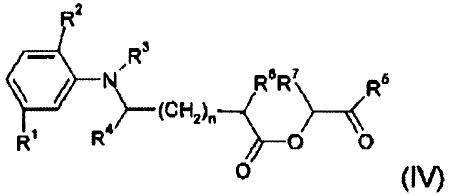 dans laquelle R¹ à R⁷ et n sont tels que définis dans la revendication 1.

18. Utilisation d'un colorant de formule générale I selon la revendication 1 pour la coloration et l'impression de matériaux hydrophobes.

19. Encre pour l'impression textile numérique par le procédé à jet d'encre, **caractérisée en ce qu'**elle contient un colorant de formule générale (I) selon la revendication 1.
